# EUROPÄISCHE PATENTSCHRIFT

(11) **EP 2 974 826 B1**
(45) Veröffentlichungstag und Bekanntmachung des Hinweises auf die Patenterteilung: **30.08.2017**
(21) Anmeldenummer: 15176953.6
(22) Anmeldetag: 16.07.2015
(51) Int. Cl.: B24B 9/10

(54) **VERFAHREN ZUR HOCHPRÄZISEN ECKENKONTURIERUNG VON FLACHGLASSUBSTRATEN IM DURCHLAUF**
METHOD FOR THE HIGHLY PRECISE CORNER CONTOURING OF FLAT GLASS SUBSTRATES IN CONTINUOUS FLOW
PROCEDE DE FAÇONNAGE DE CONTOUR DE HAUTE PRECISION DE SUBSTRATS DE VERRE PLAT EN MARCHE

(30) Priorität: 17.07.2014 DE 102014213953
(43) Veröffentlichungstag der Anmeldung: 20.01.2016
(73) Patentinhaber: Schott AG, 55122 Mainz (DE); Schott VTF (Societe Par Actions Simplifiee), 57870 Troisfontaines (FR)
(72) Erfinder: SATTLER, Jochem, 67434 Neustadt/Wstr. (DE); GREINER, Dominique, 57400 Buhl-Lorraine (FR)
(74) Vertreter: Mehler Achler

(56) Entgegenhaltungen:
- US-A1- 2010 279 588
- US-B2- 6 887 140

## Beschreibung

Die vorliegende Erfindung betrifft ein Verfahren zur Eckenkonturierung von Flachglassubstraten, wie beispielsweise für Haushaltsgeräte, im Durchlauf.

Einen wichtigen Bestandteil der formgebenden Nachverarbeitung von Flachglassubstraten stellt das Kantenschleifen dar. Dieser Prozessschritt vollzieht sich zumeist im Durchlaufverfahren, bei dem zunächst gleichzeitig die Längskanten bearbeitet, daraufhin das Flachglassubstrat um 90° gedreht und anschließend die Querkanten auf Endmaß geschliffen werden. Dabei können derzeit Vorschubgeschwindigkeiten von bis zu 12m/min erreicht werden. Bei Größendimensionen, wie sie beispielsweise im Bereich von Haushaltsgeräten vorkommen, sind aufgrund dieser Vorschubgeschwindigkeiten Stückzahlen von bis zu 1000 Stück/Stunde realisierbar.

Bei solch hohen Vorschubgeschwindigkeiten entfällt jedoch zumeist eine spezifische Bearbeitung der Ecken der Flachglassubstrate oder diese werden lediglich durch ein einfaches, mechanisch kontrolliertes und oft ungenaues Kantenstoßen gebrochen.

So offenbart beispielsweise die EP 1 190 816 B1 eine Eckenschleifeinheit zum Bearbeiten der Ecken von Flachglasscheiben im Durchlauf, bei der ein Schleifwerkzeug innerhalb eines aus Führungswalzen gebildeten Käfigs derart angeordnet und zwangsgeführt ist, dass die bearbeitete Ecke in Form einer 45° Fase gebrochen wird.

Auch in der JP 2001239443 A werden eine Methode und eine Vorrichtung offenbart, bei der ein Glassubstrat in einer Durchlaufbewegung an ein Konturierungswerkzeug herangefahren wird. Die Konturierungswerkzeuge sind lediglich senkrecht zu der Vorschubrichtung des Glassubstrats beweglich angeordnet und werden derart zu der Durchlaufbewegung synchronisiert bewegt, dass die Ecken wiederum in Form einer 45° Fase gebrochen werden.

Nachteilig ist jeweils einerseits eine geringe Präzision der Eckenbearbeitung und andererseits eine limitierte Gestaltungsfreiheit für die Ecken.

Ein etwas anderer Ansatz ist beispielsweise in der DE 3035612 offenbart, der das Runden der Ecken von Glasscheiben im Durchlauf erlaubt. Die Einrichtung weist eine Umfangsschleifscheibe auf, die an einem schwenkbaren und federbelasteten Arm aufgehängt ist. Zwar stellt das Verrunden der Ecken eine größere Formenvielfalt bereit, aufgrund ungenügender Achsensteuerung ist die Wiederholgenauigkeit jedoch weiterhin sehr begrenzt.

Gleiches gilt auch für eine bereits am Markt angebotene Vorrichtung, bei der ein Werkzeug auf einem im 45°-Winkel angeordneten Schlitten mit modulierter Geschwindigkeit dergestalt geführt wird, dass eine, wenn auch ungenaue, Radiengeometrie an der einzelnen Ecke entsteht.

Mit steigenden Anforderungen nach stets höheren Genauigkeiten und neuen ästhetischen Eigenschaften durch beispielsweise weichere oder asymmetrische oder allgemein komplexere Konturen, insbesondere bei Haushaltsgerätegläsern wie Kaminofenscheiben, Kühlschrankkomponenten, Bedienpanels oder Kochfeldern, sind Hersteller gezwungen, auf langsamere und signifikant teurere Bearbeitungsprozesse unter Verwendung von Stationärschleifmaschinen auszuweichen. Eine hohe Präzision wird hierbei durch das Betreiben in einem einzigen vollen Umlauf ohne Absetzen oder gar Wechseln des Werkzeuges an den Übergängen zwischen den Längs- oder Querkanten und der Ecken erzielt. Mit solchen Stationärschleifmaschinen sind jedoch nur Durchsatzmengen von ca. 100 Stück/Stunde je eingesetzter Werkzeugspindel erzielbar.

Wünschenswert ist es, die mit der Stationärtechnik erzielbare Präzision und Variabilität mit der Wirtschaftlichkeit der Durchlauftechnik zu vereinbaren. Um diesem Ziel näher zu kommen, gab es in den letzten Jahren weitere Ansätze, die Eckenbearbeitung in Durchlaufanlagen zu integrieren.

Neueste Entwicklungen basieren auf moderner CNC-Steuerungstechnik und erlauben die Bearbeitung komplexer Konturen an den Ecken im vollen Durchlauf bei immerhin einem Durchsatz von bis zu 400 Stück/Stunde für Flachglassubstrate vom Format typischer Haushaltsgerätegläser. Die Konturierungswerkzeuge sind zweidimensional verfahrbar und werden synchron zur Durchlaufbewegung des Werkstückes über eine Steuerstrecke mitgeführt. Die synchronisierte Bewegung wird zuvor von dem die Arbeitsstation passierenden Werkstück getriggert. Dieser Vorgang wird hierin als Aufsynchronisieren der Bewegung des Konturierungswerkzeugs auf die Durchlaufbewegung des Flachglassubstrats bezeichnet. Programmgesteuert nähert sich das Werkzeug an die Ecken an und fährt anschließend die programmierte Bahn ab. Dieser Vorgang wird als Konturieren bezeichnet, bei dem eine die Durchlaufbewegung überlagernde Relativbewegung zwischen dem Konturierungswerkzeug und dem Flachglassubstrat ausgeführt wird. Mit diesen Vorrichtungen ist es möglich, nicht nur die Ecken, sondern die gesamte Längskante in einer komplexen Kontur mit verbesserter Qualität zu bearbeiten. Das Konturierungswerkzeug sowie dessen CNCsteuerbare Antriebseinheit bilden zusammen ein CNC-Aggregat.

Aus der Schrift US 6,887,140 B2 ist eine Vorrichtung zur Ausführung eines Konturierungsverfahrens bekannt, die einen ersten in Richtung der Durchlaufbewegung des Flachglassubstrats verfahrbaren Tisch und einen senkrecht zur Durchlaufbewegung verfahrbaren und auf dem ersten Tisch angeordneten zweiten Tisch aufweist, der das Konturierungswerkzeug und dessen Antriebseinheit trägt. Jeder Tisch weist einen Anschlag auf, der an das Flachglassubstrat herangefahren werden kann. Das Konturieren findet hier an einem ortsfest eingespannten Flachglassubstrat statt.

Die Schrift US 2010/0279588 A1 beschreibt ein gattungsgemäßes Verfahren und die dazugehörige Vorrichtung zur Eckenkonturierung von Flachglassubstraten, bei dem die Bewegung eines passierenden Flachglassubstrats mithilfe eines Sensors erfasst und die Bewegung des Schleifwerkzeugs in der Vorschubrichtung so gesteuert wird, dass die Relativbewegung zwischen Werkzeug und Flachglas nach Möglichkeit konstant Null beträgt. Danach setzt das Schleifen der Ecke ein.

Jedoch ist auch bei diesen Lösungen eine hochpräzise Erzeugung von Eckenradien nicht sicher gestellt. Grund hierfür sind zum einen die schweren CNC-Aggregate, die massenträge auf das CNC-Steuersignal reagieren. Zum anderen hängt die Genauigkeit der abgefahrenen Kontur von der Maßhaltigkeit, Geometrie- und Lagetoleranz der zu bearbeitenden Glasplatte sowie einer hohen Synchronität zwischen der Durchlaufbewegung des Flachglases und der aufsynchronisierten Bewegung des Konturierungswerkzeugs ab. Folglich können weiterhin Startpunktversätze von mehreren zehntel Millimetern entstehen, die deutlich sichtbare, optische bzw. kosmetische Nachteile, etwa sicht- und fühlbare Übergänge von den Ecken zu den Längskanten, zur Folge haben.

Aufgabe der vorliegenden Erfindung ist es, die voran beschriebenen Nachteile des Standes der Technik zu verringern.

Die Aufgabe wird gelöst durch ein Verfahren mit den Merkmalen des Patentanspruches 1.

Das Verfahren zur Eckenkonturierung von Flachglassubstraten im Durchlauf mittels Konturierungswerkzeug umfasst die Schritte: Aufsynchronisieren der Bewegung einer ersten Trägereinheit auf die Durchlaufbewegung des Flachglassubstrats, mechanisches, elektrisches, akustisches oder optisches Koppeln einer beweglich auf der ersten Trägereinheit gelagerten zweiten Trägereinheit an das Flachgassubstrat, Konturieren einer Ecke des Flachglassubstrats, wobei, die Durchlaufbewegung überlagernd, das Kontierungswerkzeug eine relativ zur zweiten Trägereinheit gesteuerte Bewegung ausführt, so dass eine Relativbewegung zwischen dem Konturierungswerkzeug und dem Flachglassubstrat ausgeführt wird.

Entscheidend für eine Verbesserung der Eckenkonturierung ist die Kopplung der Relativbewegung des Konturierungswerkzeugs an das Flachglassubstrat und insbesondere an die Ecke des Flachglassubstrats. Während beim Stand der Technik das Aufsynchronisieren der Bewegung des Konturierungswerkzeugs auf die Durchlaufbewegung des Flachglassubstrats durch einen Starttrigger ausgelöst wird und anschließend völlig autonom abläuft, wird erfindungsgemäß das Aufsynchronisieren durch ein Koppeln der Relativbewegung an die tatsächliche Lage der Ecke des Flachglassubstrates ("Ist-Position") ergänzt. Das Koppeln bewirkt, dass jede Abweichung von Form, Lage und Durchlaufbewegung des Flachglassubstrates von einem Soll- oder Erwartungswert nach dem Aufsynchronisieren der Bewegung des Konturierungswerkzeugs fortlaufend berücksichtigt bzw. korrigiert wird. Die Relativbewegung zwischen dem Konturierungswerkzeug und dem Flachglassubstrat ist hiernach allein durch die (programmierte) Bearbeitungsbahn des Konturierungswerkzeugs bestimmt und Startpunktversätze können ausgeschlossen werden, wodurch das Bearbeitungsergebnis nochmals erheblich genauer ausfällt. Übergänge von den Längs- und Querkanten zu der Kontur der Ecke sind quasi nicht mehr sichtbar.

Ein weiterer Vorteil dieses Verfahrens liegt darin, dass an das tatsächliche Maß des zu profilierenden Glases nur geringe Genauigkeitsanforderungen gestellt werden müssen, da die Kontur relativ zur tatsächlichen Lager der Ecke erfolgt.

Vorzugsweise verläuft die Relativbewegung in der Ebene des Flachglases, d.h. in der Ebene, die von den Längs- und Querkanten aufgespannt wird. Dies hat zum Vorteil, dass insbesondere die Kantenkonturierung, wie beispielsweise ein C-Schliff oder eine Doppelfase oder dgl., durchgehend auch an den Ecken erzeugt werden können.

In einer bevorzugten Ausführungsform des erfindungsgemäßen Verfahrens erfolgt die Relativbewegung, wie bereits gesagt, gekoppelt an die Lage der Ecke des Flachglassubstrats. Grundsätzlich kommt es nicht darauf an, ob die Lage der Ecke unmittelbar erfasst wird oder ob sie beispielweise nach Erfassen anderer geometrischer Merkmale des Flachglassubstrats, wie zum Beispiel dessen Längs- und Querkanten oder eigens für die Lageerfassung vorgesehener Markierungen, interpoliert wird.

Bei einer mechanischen Kopplung wird die die Relativbewegung beschreibende Konturierungsbahn mittels wenigstens eines mechanischen Kontakts zwischen dem Flachglassubstrat und einem mit der aufsynchronisierten Bewegung des Konturierungswerkzeugs mitgeführten Anschlags gekoppelt. Dieser Kontakt kann formschlüssig sein und zugleich auch Kraftkomponenten umfassen.

Unter elektrischer Kopplung wird verstanden, dass die Kopplung mittels wenigstens eines elektrischen Kontakts oder einer kapazitiven Näherungssensorik erfolgt, wobei die Ist-Position der Ecke, wie vorstehend beschrieben, unmittelbar an der Ecke selbst oder an bestimmten Referenzpunkten des Flachglassubstrats erfasst werden kann und gegebenenfalls einer Korrektur der aufsynchronisierten Bewegung des Konturierungswerkzeugs zur Verfügung gestellt werden kann.

Analog kann eine Bestimmung der Ist-Position der Ecke und damit eine Kopplung im Sinne der Erfindung auch mittels akustischer Abstandssensorik (Ultraschallsensor) oder mittels optischer Abstandssensorik (Intereferrenz- oder Laufzeitmessung) oder mittels Bilderfassung und Auswertung kontinuierlich erfolgen und gegebenenfalls einer Korrektur der aufsynchronisierten Bewegung des Konturierungswerkzeugs zur Verfügung gestellt werden.

Erfindungsgemäß findet ein Aufsynchronisieren der Bewegung des Konturierungswerkzeugs auf die Durchlaufbewegung des Flachglassubstrats statt, durch Aufsynchronisieren der Bewegung der ersten Trägereinheit auf die Durchlaufbewegung des Flachglassubstrats und durch Koppeln der Relativbewegung an das Flachglassubstrat durch ein formschlüssiges Anlegen (mechanisches Koppeln), ein elektrisches Koppeln, ein optisches Koppeln oder ein akustisches Koppeln der zweiten Trägereinheit an dem Flachglassubstrat, wobei die zweite Trägereinheit beweglich auf der ersten Trägereinheit gelagert ist und wobei die Relativbewegung eine relativ zur zweiten Trägereinheit gesteuerte Bewegung des Konturierungswerkzeuges ist. Entscheidend ist, dass die mechanischen, elektrischen, optischen und akustischen Koppelelemente, d.h. die oben erwähnte Sensorik wie auch der mitgeführte Anschlag auf oder an der zweiten Trägereinheit angeordnet sind und mit dieser mitgeführt werden. Auf diese Weise kann sowohl eine Abweichung der Ist-Position der Ecke von deren Soll-Position als auch eine Bewegungsunruhe, d.h. eine Differenzbewegung zwischen dem Flachglassubstrat und der aufsynchronisierten ersten Trägereinheit, mithilfe der zweiten Trägereinheit ermittelt und ausgeglichen werden.

Das erfindungsgemäße Verfahren zur Eckenkonturierung von Flachglassubstraten im Durchlauf mittels Konturierungswerkzeug umfasst gemäß dem Aspekt der mechanischen Kopplung zusammengefasst also die Schritte: Aufsynchronisieren der Bewegung einer ersten Trägereinheit des Konturierungswerkzeugs auf die Durchlaufbewegung des Flachglassubstrats; formschlüssiges Anlegen einer beweglich auf der ersten Trägereinheit gelagerten zweiten Trägereinheit an dem Flachglassubstrat, was hier auch als "Koppeln" bezeichnet wird; Konturieren einer Ecke des Flachglassubstrats, wobei, die Durchlaufbewegung überlagernd, unter Beibehaltung des Formschlusses zwischen der zweiten Trägereinheit und dem Flachglassubstrat das Konturierungswerkzeug eine relativ zur zweiten Trägereinheit gesteuerte Bewegung ausführt.

Bei dieser Variante der mechanischen Kopplung stellt die zweite Trägereinheit gewissermaßen einen mitlaufenden Anschlag bereit. Die zweite Trägereinheit wird aufgrund der Bewegung der ersten Trägereinheit mit dem durchlaufenden Flachglassubstrat aufsynchronisiert, indem sie mittels geeigneter Stellantriebe auf Werkstückgeschwindigkeit beschleunigt wird. Das Koppeln erfolgt dann durch ein formschlüssiges Anlegen der in zwei Achsrichtungen in der Ebene des Flachglassubstrats beweglich auf der ersten Trägereinheit gelagerten zweiten Trägereinheit an dem Flachglassubstrat. Die bewegliche Lagerung kann vorzugsweise durch Federelemente unterstützt werden, die zwischen der ersten Trägereinheit und der zweiten Trägereinheit in Richtung der zwei Achsen in der Ebene des Flachglassubstrates (x- und y-Richtung) wirken und die zweite Trägereinheit permanent gegen das Flachglassubstrat andrücken, solange die Kopplung aufrecht erhalten wird. Auf diese Weise kann sowohl eine Abweichung der Ist-Position der Ecke von deren Soll-Position als auch eine Bewegungsunruhe, d.h. eine Differenzbewegung zwischen dem Flachglassubstrat und der aufsynchronisierten ersten Trägereinheit, ausgeglichen werden.

Anschließend beginnt bei weiterer, jetzt gekoppelter Synchronfahrt, das heißt unter Beibehaltung des Formschlusses zwischen der zweiten Trägereinheit und dem Flachglassubstrat, das eigentliche Konturieren der Ecke. Dabei führt das Konturierungswerkzeug eine relativ zur zweiten Trägereinheit gesteuerte Bewegung aus, was vorzugsweise durch eine CNC-programmierte Werkzeugbahn realisiert wird, wobei zumindest Teile des Stellantriebs für den Werkzeugvorschub und insbesondere dessen Bezugspunkt auf der zweiten Trägereinheit angeordnet sind. Andere Antriebselemente, wie beispielsweise der Spindelantrieb für das Werkzeug, sind zur Reduzierung der gefederten Masse der zweiten Trägereinheit vorzugsweise auf der ersten Trägereinheit angebracht, wobei eine Übertragung des Drehmoments beispielsweise durch eine Kardanwelle realisiert werden kann. CNC-Bahnen gewährleisten bekanntermaßen hochpräzise und wiederholfeste Arbeitsschritte. Durch den Formschluss zwischen dem Glassubstrat und der zweiten Trägereinheit wird die Relativbewegung zwischen Flachglassubstrat und Konturierungswerkzeug ausschließlich durch diese vorgegebene Bahn bestimmt.

Die Federkräfte, mit denen die zweite Trägereinheit gegen das Flachglassubstrat angedrückt wird, sind vorzugsweise größer als die bei der Bearbeitung auftretenden Vorschub- bzw. Zerspanungskräfte des Werkzeugs gewählt, damit die Bearbeitungskräfte während der Konturierung der Ecke keine signifikante Relativbewegung des Werkzeugs zum Flachglassubstrat bewirken, aber andererseits noch so gering, dass ein geschmeidiges formschlüssiges Anlegen möglich ist.

Es kann pro Ecke des Flachglassubstrates ein CNC-Aggregat wie vorstehend beschrieben vorgesehen sein, um eine simultane Bearbeitung aller Ecken durchzuführen. Jedes CNC-Aggregat ist auf einer zugeordneten ersten Trägereinheit angeordnet. Die erste Trägereinheit und das Aggregat müssen jedenfalls über einen ausreichenden Verfahrweg zwischen einer Ausgangsstellung und einer Endstellung verfügen, damit die Dauer der Synchronfahrt für die vollständige Eckenkonturierung ausreicht.

In einer weiteren vorteilhaften Ausführungsform erfolgt das formschlüssige Anlegen der zweiten Trägereinheit an das Flachglassubstrat taktil.

Das taktile Anlegen wird vorzugsweise über einen oder mehrere Signalgeber realisiert, die auf der zweiten Trägereinheit angeordnet sind. In Frage kommen beispielsweise Kraftsensoren. Bevorzugt sind zwei Signalgeber mit Wirkrichtungen vorgesehen, die denen der Federelemente entsprechen. Die erste Trägereinheit wird beim taktilen Anlegen so lange an das Glassubstrat herangefahren, bis der oder die Signalgeber bei einem (ersten) Kontakt (Berührung) mit dem Glassubstrat oder bei Überschreiten eines voreingestellten Kraftwertes oder bei Erfassung eines vorbestimmten Abstandes ein Signal ausgeben, wodurch der Formschluss bestätigt wird. Entweder unmittelbar nach der Bestätigung oder nach Erreichen eines festgelegten Zustellweges, durch den die Federelemente vorzugsweise vorgespannt werden, wird der aktive Teil des Anlegens beendet. Danach bleibt die zweite Trägereinheit passiv durch die Federelemente an dem Flachglassubstrat angelegt. Eine Relativbewegung zwischen Flachglassubstrat und Konturierungswerkzeug wird hiernach, wie vorstehend beschrieben, ausschließlich durch die vorgegebene Werkzeugbahn des Konturierungswerkzeugs bestimmt.

Der Formschluss zwischen der zweiten Trägereinheit und dem Flachglassubstrat kann weiter verbessert werden, indem gemäß einer vorteilhaften Weiterbildung eine Klemmung zwischen der zweiten Trägereinheit und dem Flachglassubstrat vorgenommen wird. Eine Klemmung stellt einen stabileren Formschluss her, der auch größeren Bearbeitungskräften standhält und deshalb eine verminderte Störanfälligkeit beim Eckenkonturieren aufweist.

Nach dem Beenden der Relativbewegung wird auch die Kopplung zwischen Flachglassubstrat und Konturierungswerkzeug wieder aufgehoben. Ist der so definierte Endpunkt der Eckenkonturierung erreicht, wird die erste Trägereinheit (mit CNC-Aggregat) - immer noch aufsynchronisiert auf die Durchlaufbewegung des Flachglassubstrats - vom Flachglassubstrat weggefahren, bis der zweite Support nicht mehr an diesem anliegt, d.h. die Kopplung aufgehoben ist, und kann anschließend in seine Ausgangsposition zurückgefahren werden. Das Konturierungswerkzeug steht dann für das nächste Flachglassubstrat zur Verfügung und das Flachglas läuft zu dem nächsten Prozessschritt.

Weitere Vorteile und Eigenschaften des erfindungsmäßigen Verfahrens werden nachfolgend anhand von Ausführungsbeispielen unter Zuhilfenahme der Figuren erläutert. Es zeigen:
- Figur 1: das Aufsynchronisieren des Werkzeugs auf die Durchlaufbewegung des Flachglassubstrats,
- Figur 2: das Koppeln der zweiten Trägereinheit an das Flachglassubstrat,
- Figur 3: den Beginn der Eckenkonturierung,
- Figur 4: das Ende der Eckenkonturierung,
- Figur 5: das Aufheben der Kopplung zwischen der zweiten Trägereinheit und dem Flachglassubstrat.

In den im Folgenden beschriebenen Figuren ist jeweils eine Aufsicht (d.h. senkrecht zur Ebene des Flachglassubstrats) auf eine Vorrichtung zum Ausführen des erfindungsgemäßen Verfahrens als Momentaufnahme zu verschiedenen Verfahrenszeitpunkten gezeigt.

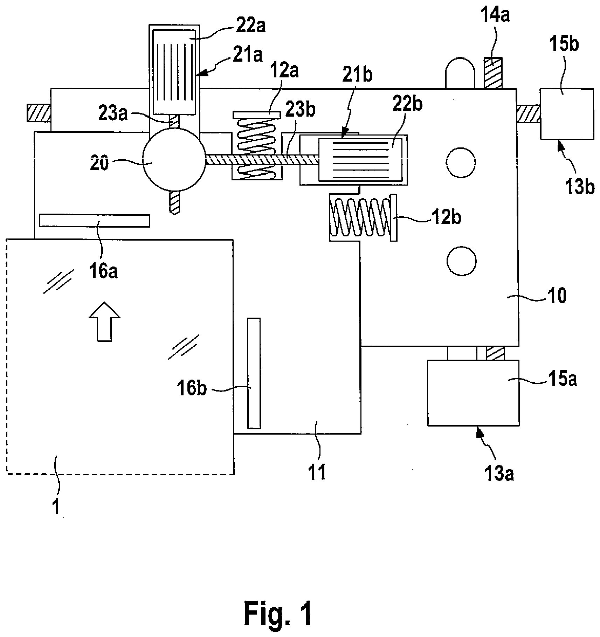

In Figur 1 ist das Flachglassubstrat 1 in Durchlaufbewegung dargestellt. Die Durchlaufbewegung wird durch den Pfeil auf dem Flachglas 1 symbolisiert. Auf diese Durchlaufbewegung ist die Bewegung einer ersten Trägereinheit 10 aufsynchronisiert, so dass sowohl die Trägereinheit 10 als auch das Flachglassubstrat 1, gegebenenfalls bis auf unbeabsichtigte, fehlerhafte Abweichungen, die gleiche Durchlaufgeschwindigkeit und Durchlaufrichtung aufweisen. Angetrieben wird die erste Trägereinheit 10 durch eine erste Antriebseinheit 13a, die beispielsweise, wie hier dargestellt, aus einer Spindel 14a und einem Stellmotor 15a bestehen kann.

Auf der ersten Trägereinheit 10 ist eine zweite Trägereinheit 11 angeordnet und in der Ebene des Flachglassubstrats 1 relativ zur ersten Trägereinheit 10 beweglich. Die zweite Trägereinheit wird zudem durch Federelemente 12a und 12b gegen die erste Trägereinheit 11 abgestützt. Das Federelement 12a wirkt parallel zur Durchlaufrichtung des Flachglases und das Federelement 12b senkrecht dazu und beide wirken in der Ebene des Flachglassubstrates 1. Die zweite Trägereinheit 11 wird zunächst mit der ersten Trägereinheit 10 synchron zur Durchlaufbewegung des Flachglassubstrats 1 mitbewegt.

Auf der zweiten Trägereinheit 11 ist das Werkzeug 20 beweglich angeordnet. Die Werkzeugbewegung (auch als "Vorschub" bezeichnet) erfolgt ebenfalls zweidimensional in der Ebene des Flachglassubstrats 1 und wird über Stellantriebe 21a und 21b angetrieben, die ihren Bezugspunkt auf der zweiten Trägereinheit haben. Dieser Umstand stellt sicher, dass die Relativbewegung zwischen dem Werkzeug und der zweiten Trägereinheit allein durch die Werkzeugbahn definiert wird. Die Antriebseinheiten 21a und 21b sind in dem gezeigten Beispiel so angeordnet, dass die Antriebseinheit 21a das Werkzeug 20 parallel und die Antriebseinheit 21b das Werkzeug 20 senkrecht zu der Durchlaufrichtung des Flachglassubstrats 1 verfährt. Andere Lagen der Antriebsachsen sind aber möglich. In der Figur 1 weisen beide Stellantriebe 21a und 21b jeweils einen Motor 22a, 22b und eine Spindel 23a, 23b auf.

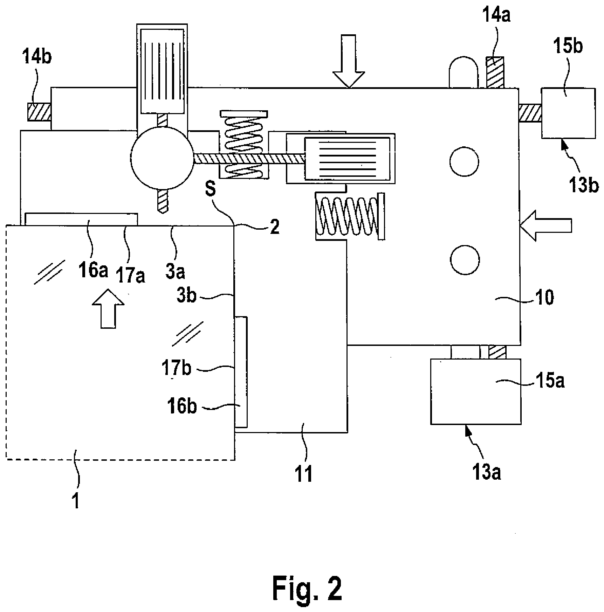

In Figur 2 ist der Kopplungsschritt zwischen der zweiten Trägereinheit 11 und dem Flachglassubstrat 1 dargestellt. Zu diesem Zweck weist die zweite Trägereinheit 11 zwei Signalgeber 16a und 16b auf. Zur Kopplung zwischen dem Flachglassubstrat 1 und der zweiten Trägereinheit 11 wird die erste Trägereinheit 10 mittels der ersten Antriebseinheit 13a parallel und mittels einer zweiten Antriebseinheit 13b senkrecht zur Durchlaufbewegung des Flachglassubstrats in Richtung des Flachglassubstrats 1 bewegt. Berührt das Flachglassubstrat 1 mit seiner Vorderkante 3a den zugeordneten Signalgeber 16a gibt dieser ein Kontaktsignal aus. Das gleiche geschieht, wenn die Seitenkante 3b an den zugeordneten Signalgeber 16b anstößt. Die Signalgeber 16a und 16b können beispielsweise mechanische, elektrische, akustische oder aber auch optische Signalgeber sein. Sie bilden den "mitlaufenden Anschlag", an dem das Flachglas 1 mit den Kanten 3a und 3b formschlüssig anliegt. Die zu bearbeitende Ecke 2 des Flachglassubstrats 1 befindet sich nun genau in dem Schnittpunkt S, der verlängerten Kanten der dem Glassubstrat 1 zugewandten Seitenflächen 17a und 17b des mitlaufenden Anschlags.

Die Signalgeber 16a und 16b erlauben das sogenannte "taktile Anlegen". In dem gezeigten Fall reagieren diese einfach auf Berührung. Alternativ kommen beispielsweise auch Abstands- oder Kraftsensoren in Frage. Ihre Wirkrichtungen fallen mit denen der Federelemente 12a und 12 b zusammen. Die Federelemente erlauben, die erste Trägereinheit beim taktilen Anlegen auch noch um einen bestimmten Fahrweg über den ersten Kontakt hinaus in Richtung des Glassubstrates zu verfahren und dabei die Federelemente vorzuspannen, d.h. eine gewünschte Anpresskraft einzustellen. Danach ist der aktive Teil des Anlegens beendet.

Bei dieser Variante der mechanischen Kopplung bleibt die zweite Trägereinheit danach passiv durch die Federelemente an dem Flachglassubstrat angelegt. Auf diese Weise wird sowohl eine Abweichung der Ist-Position der Ecke von deren Soll-Position als auch eine Bewegungsunruhe, d.h. eine Differenzbewegung zwischen dem Flachglassubstrat und der aufsynchronisierten ersten Trägereinheit, ausgeglichen. Eine Relativbewegung zwischen Flachglassubstrat und Konturierungswerkzeug wird, wie nachstehend beschrieben, dann ausschließlich durch die vorgegebene Werkzeugbahn des Konturierungswerkzeugs bestimmt. Allerdings ist darauf zu achten, dass die Feder- oder Haltekräfte der Federelemente 12a und 12b, die die zweite Trägereinheit 11 mit der ersten Trägereinheit 10 verbinden, groß genug sind, keine Relativbewegung zwischen dem Flachglas 1 und der zweiten Trägereinheit 11 zuzulassen und den bei der Bearbeitung auftretenden Vorschub- bzw. Zerspanungskräfte genügend Widerstand entgegenzusetzen.

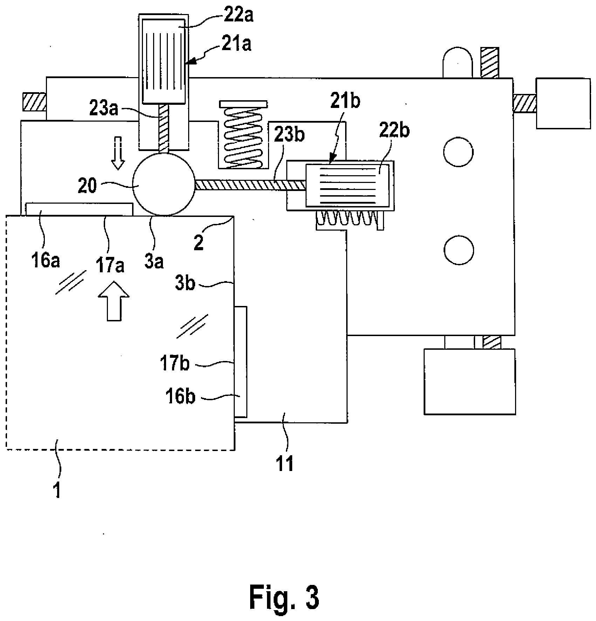

Anhand von Figur 3 wird der anschließende Beginn der Eckenkonturierung erläutert. Nachdem die zweite Trägereinheit 11 und das Flachglassubstrat 1 miteinander gekoppelt sind, fährt das Werkzeug 20 an das Flachglas 1 heran. Der Startpunkt befindet sich entlang der an dem Signalgeber 16a anliegenden Vorderkante 3a des Flachglassubstrates 1. Weil die Stellantriebe 21a und 21b für den Werkzeugvorschub insgesamt oder zumindest deren Bezugspunkte auf der zweiten Trägereinheit angeordnet sind und das Flachglassubstrat hierzu ortsfest ist, ist der Beginn der Eckenkonturierung ohne Startpunktversatz zwischen Werkzeug 20 und Flachglassubstrat 1 möglich.

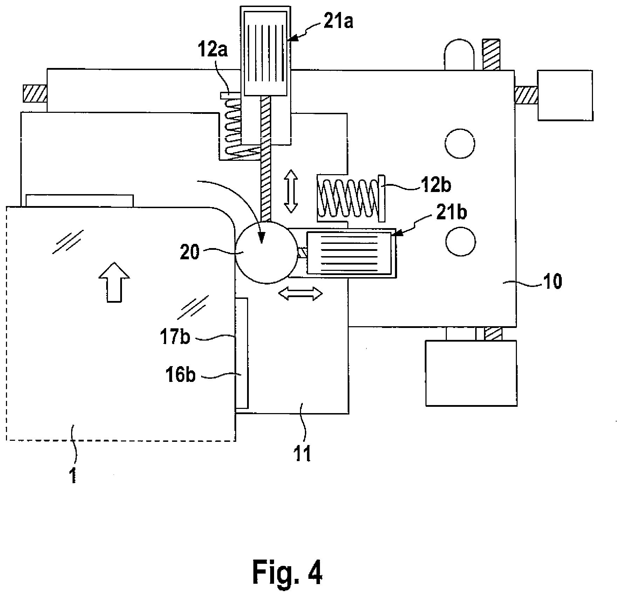

Wie in Figur 4 dargestellt, beginnt anschließend bei weiterer, jetzt gekoppelter Synchronfahrt, das heißt unter Beibehaltung des Formschlusses zwischen der zweiten Trägereinheit 11 und dem Flachglassubstrat 1, das eigentliche Konturieren der Ecke 2. Dabei erfolgt die Steuerung der Stellantriebe 21a, 21b vorzugsweise mittels einer CNC-Steuerung. Durch die weiterhin bestehende Kopplung zwischen dem Flachglassubstrat 1 und der zweiten Trägereinheit 11 ist die vorgegebene Bahn des Werkzeugs 20 die einzige Relativbewegung, die zwischen dem Flachglas 1 und dem Werkzeug 20 erfolgt. Die Bearbeitung ist dann abgeschlossen, wenn der Endpunkt entlang der Seitenkante 3b des Flachglases 1 erreicht ist.

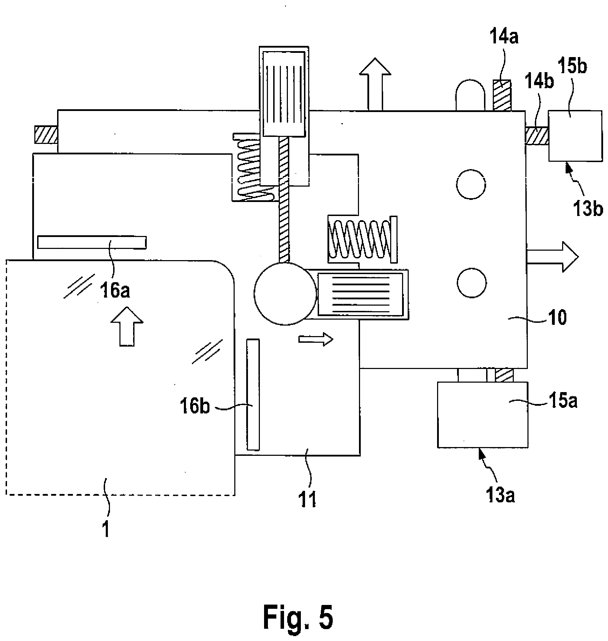

Sobald die Konturierung abgeschlossen ist, wird das Werkzeug 20 mittels der Stellantriebe 21a und 21b von dem Glassubstrat 1 weggefahren. Die erste Trägereinheit 10 ist nach wie vor mit der Durchlaufbewegung des Glases 1 synchronisiert und die zweite Trägereinheit 11 ist weiterhin formschlüssig mit dem Glas 1 verbunden. Erst nachdem das Werkzeug 20 weit genug von dem Glassubstrat 1 beabstandet ist, erfolgt die Entkopplung des Flachglassubstrats 1 von der zweiten Trägereinheit 11, indem die erste Trägereinheit 10 zusammen mit der darauf angeordneten zweiten Trägereinheit 11 mittels der Antriebseinheiten 13a und 13b verfahren wird. Beides wird in Figur 5 illustriert. Die Eckenkonturierung ist nun abgeschlossen.

### Bezugszeichenliste

- 1: Flachglassubstrat
- 2: Ecke
- 3a,b: Seitenkanten des Flachglassubstrats

- 10: erste Trägereinheit
- 11: zweite Trägereinheit
- 12a,b: Federelement
- 13a,b: Antriebseinheit
- 14a,b: Spindel
- 15a,b: Stellmotor
- 16a,b: Signalgeber
- 17a,b: Seitenfläche der Signalgeber

- 20: Werkzeug
- 21a,b: Stellantrieb
- 22a,b: Motor
- 23a,b: Spindel

## Patentansprüche

1. Verfahren zur Eckenkonturierung von Flachglassubstraten (1) im Durchlauf mittels Konturierungswerkzeug (20) beinhaltend folgende Schritte:
- Aufsynchronisieren der Bewegung einer ersten Trägereinheit (10) auf die Durchlaufbewegung des Flachglassubstrats (1)
- mechanisches, elektrisches, akustisches oder optisches Koppeln einer beweglich auf der ersten Trägereinheit (10) gelagerten zweiten Trägereinheit (11) an das Flachglassubstrat (1),
- Konturieren einer Ecke (2) des Flachglassubstrats (1), wobei, die Durchlaufbewegung überlagernd, das Konturierungswerkzeug (20) eine relativ zur zweiten Trägereinheit (11) gesteuerte Bewegung ausführt.

2. Verfahren nach Anspruch 1, **dadurch gekennzeichnet,**
**dass** die Relativbewegung gekoppelt an die Lage der Ecke (2) des Flachglassubstrats (1) erfolgt.

3. Verfahren nach Anspruch 1 oder 2, **dadurch gekennzeichnet,**
**dass** das mechanische Koppeln ein formschlüssiges Anlegen der zweiten Trägereinheit (11) an dem Flachglassubstrat (1) ist, wobei das Konturieren der Ecke (2) des Flachglassubstrats (1) unter Beibehaltung des Formschlusses zwischen der zweiten Trägereinheit (11) und dem Flachglassubstrat (1) erfolgt.

4. Verfahren nach Anspruch 3, **dadurch gekennzeichnet,**
**dass** die zweite Trägereinheit (11) in zwei Achsrichtungen in der Ebene des Flachglassubstrats auf der ersten Trägereinheit (10) gelagert ist.

5. Verfahren nach einem der Ansprüche 3 oder 4, **dadurch gekennzeichnet, dass** das formschlüssige Anlegen der zweiten Trägereinheit (11) an dem Flachglassubstrat (1) taktil erfolgt.

6. Verfahren nach Anspruch 5, **dadurch gekennzeichnet,**
**dass** einer oder mehrere Signalgeber (16a, 16b) auf der zweiten Trägereinheit (11) angeordnet sind und dass die erste Trägereinheit (10) beim Anlegen an das Flachglassubstrat (1) herangefahren wird, bis der oder die Signalgeber bei Berührung mit dem Flachglassubstrat oder bei Überschreiten eines vorbestimmten Kraftwertes oder bei Erfassung eines vorbestimmten Abstandes ein Signal ausgeben.

7. Verfahren nach einem der Ansprüche 3 bis 6, **dadurch gekennzeichnet, dass** nach dem Koppeln die zweite Trägereinheit (11) und das Flachglassubstrat (1) relativ zueinander ortsfest sind.

8. Verfahren nach einem der Ansprüche 3 bis 7, **dadurch gekennzeichnet, dass** zwischen zweiter Trägereinheit (11) und Flachglassubstrat (1) eine Klemmung erfolgt.

9. Verfahren nach einem der Ansprüche 3 bis 8, **dadurch gekennzeichnet, dass** zwischen der ersten Trägereinheit (10) und der zweiten Trägereinheit (11) in den zwei Achsrichtungen in der Ebene des Flachglassubstrats (1) Federelemente (12a, 12b) wirken, die die zweite Trägereinheit (11) während des Koppelns permanent gegen das Flachglassubstrat (1) andrücken.

10. Verfahren nach Anspruch 9, **dadurch gekennzeichnet,**
**dass** die Federelemente (12a, 12b) mit Federkräften wirken, die größer sind als die bei der Bearbeitung auftretenden Vorschub- oder Zerspanungskräfte.

11. Verfahren nach den Ansprüchen 6 und 9 oder 6 und 10 **dadurch gekennzeichnet,**
**dass** zwei Signalgeber (16a, 16b) auf der zweiten Trägereinheit (11) angeordnet sind, deren Wirkrichtungen mit den Wirkrichtungen der Federelemente (12a, 12b) zusammenfallen.

12. Verfahren nach einem der Ansprüchen 9 bis 11, **dadurch gekennzeichnet, dass** die Federelemente beim formschlüssigen Anlegen vorgespannt werden.

## Claims

1. Method for corner contouring of flat glass substrates (1) in a continuous feed-through process by means of a contouring tool (20), comprising the following steps:
- synchronizing the movement of a first carrier unit (10) to the continuous feed-through movement of the flat glass substrate (1),
- mechanically, electrically, acoustically or optically coupling a second carrier unit (11), which is mounted movably on the first carrier unit (10), to the flat glass substrate (1),
- contouring a corner (2) of the flat glass substrate (1), wherein, while overlapping the continuous feed-through movement, the contouring tool (20) executes a movement which is controlled relative to the second carrier unit (11).

2. Method according to Claim 1, **characterized**
**in that** the relative movement occurs in a manner which is coupled to the position of the corner (2) of the flat glass substrate (1).

3. Method according to Claim 1 or 2, **characterized**
**in that** the mechanical coupling is a form-fitting placement of the second carrier unit (11) on the flat glass substrate (1), wherein the contouring of the corner (2) of the flat glass substrate (1) occurs while maintaining the form fit between the second carrier unit (11) and the flat glass substrate (1).

4. Method according to Claim 3, **characterized**
**in that** the second carrier unit (11) is mounted in two axial directions in the plane of the flat glass substrate on the first carrier unit (10).

5. Method according to either of Claims 3 and 4, **characterized**
**in that** the form-fitting placement of the second carrier unit (11) on the flat glass substrate (1) occurs tactually.

6. Method according to Claim 5, **characterized**
**in that** one or more signal transmitters (16a, 16b) are arranged on the second carrier unit (11), and in that, during the placement, the first carrier unit (10) is moved up to the flat glass substrate (1) until the signal transmitter(s) emit(s) a signal upon contact with the flat glass substrate or upon exceeding a predetermined force value or upon detecting a predetermined spacing.

7. Method according to one of Claims 3 to 6, **characterized**
**in that**, after coupling, the second carrier unit (11) and the flat glass substrate (1) are fixed in position relative to one another.

8. Method according to one of Claims 3 to 7, **characterized**
**in that** clamping occurs between the second carrier unit (11) and flat glass substrate (1).

9. Method according to one of Claims 3 to 8, **characterized**
**in that** spring elements (12a, 12b) act between the first carrier unit (10) and the second carrier unit (11) in the two axial directions in the plane of the flat glass substrate (1) and permanently press the second carrier unit (11) against the flat glass substrate (1) during coupling.

10. Method according to Claim 9, **characterized**
**in that** the spring elements (12a, 12b) act with spring forces which are greater than the advancing or cutting forces which occur during machining.

11. Method according to Claims 6 and 9 or 6 and 10, **characterized**
**in that** two signal transmitters (16a, 16b) are arranged on the second carrier unit (11), the active directions of which coincide with the active directions of the spring elements (12a, 12b).

12. Method according to one of Claims 9 to 11, **characterized**
**in that** the spring elements are preloaded during the form-fitting placement.

## Revendications

1. Procédé de façonnage de contour de haute précision de substrats de verre plat (1) en défilement au moyen d'un outil de façonnage de contour (20), comprenant les étapes suivantes:
- synchronisation du déplacement d'une première unité de support (10) avec le mouvement de défilement du substrat de verre plat (1),
- couplage mécanique, électrique, acoustique ou optique d'une deuxième unité de support (11) montée de façon mobile sur la première unité de support (10) au substrat de verre plat (1),
- façonnage du contour d'un coin (2) du substrat de verre plat (1), dans lequel, en superposition au mouvement de défilement, l'outil de façonnage de contour (20) effectue un déplacement commandé par rapport à la deuxième unité de support (11).

2. Procédé selon la revendication 1, **caractérisé en ce que** le mouvement relatif se produit de façon couplée à la position du coin (2) du substrat de verre plat (1).

3. Procédé selon la revendication 1 ou 2, **caractérisé en ce que** le couplage mécanique est un dépôt avec emboîtement de la deuxième unité de support (11) sur le substrat de verre plat (1), dans lequel le façonnage de contour du coin (2) du substrat de verre plat (1) est effectué en conservant l'assemblage emboîté entre la deuxième unité de support (11) et le substrat de verre plat (1).

4. Procédé selon la revendication 3, **caractérisé en ce que** la deuxième unité de support (11) est montée dans deux directions axiales dans le plan du substrat de verre plat (1) sur la première unité de support (10).

5. Procédé selon une des revendications 3 ou 4, **caractérisé en ce que** le dépôt avec emboîtement de la deuxième unité de support (11) sur le substrat de verre plat (1) est effectué de façon tactile.

6. Procédé selon la revendication 5, **caractérisé en ce qu'**un ou plusieurs émetteur(s) de signaux (16a, 16b) est/sont disposé(s) sur la deuxième unité de support (11) et **en ce que** la première unité de support (10) est approchée lors du dépôt sur le substrat de verre plat (1), jusqu'à ce que le ou les émetteur(s) de signaux ëmette(nt) un signal lors du contact avec le substrat de verre plat ou lors d'un dépassement d'une valeur de force prédéterminée ou lors de la détection d'une distance prédéterminée.

7. Procédé selon l'une quelconque des revendications 3 à 6, **caractérisé en ce qu'**après le couplage la deuxième unité de support (11) et le substrat de verre plat (1) sont fixes l'un par rapport à l'autre.

8. Procédé selon l'une quelconque des revendications 3 à 7, **caractérisé en ce que** l'on réalise un serrage entre la deuxième unité de support (11) et le substrat de verre plat (1).

9. Procédé selon l'une quelconque des revendications 3 à 8, **caractérisé en ce que** des éléments de ressort (12a, 12b), qui pressent la deuxième unité de support (11) contre le substrat de verre plat (1) en permanence pendant le couplage, agissent entre la première unité de support (10) et la deuxième unité de support (11) dans deux directions axiales dans le plan du substrat de verre plat (1).

10. Procédé selon la revendication 9, **caractérisé en ce que** les éléments de ressort (12a, 12b) agissent avec des forces élastiques, qui sont plus élevées que les forces d'avance ou d'enlèvement de copeaux apparaissant lors de l'usinage.

11. Procédé selon les revendications 6 et 9 ou 6 et 10, **caractérisé en ce que** deux émetteurs de signaux (16a, 16b) sont disposés sur la deuxième unité de support (11), dont les directions d'action coïncident avec les directions d'action des éléments de ressort (12a, 12b).

12. Procédé selon l'une quelconque des revendications 9 à 11, **caractérisé en ce que** les éléments de ressort sont précontraints lors du dépôt avec emboîtement.
